(19) Europäisches Patentamt / European Patent Office / Office européen des brevets

(11) **EP 2 517 906 B1**

(12) **FASCICULE DE BREVET EUROPEEN**

(45) Date de publication et mention
de la délivrance du brevet:
**09.10.2013 Bulletin 2013/41**

(51) Int Cl.:
***B60H 1/00*** *(2006.01)*

(21) Numéro de dépôt: **12002679.4**

(22) Date de dépôt: **17.04.2012**

(54) **Procédé de contrôle de la température d'un fluide réfrigérateur à l'entrée d'un compresseur**

Verfahren zur Temperaturkontrolle einer Kühlflüssigkeit beim Eintritt in einen Kompressor

Method for controlling the coolant temperature at the input of a compressor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.04.2011 FR 1101304**

(43) Date de publication de la demande:
**31.10.2012 Bulletin 2012/44**

(73) Titulaire: **Valeo Systèmes Thermiques
78321 Le Mesnil Saint Denis (FR)**

(72) Inventeurs:
• **Liu, Jin Ming
78700 Conflans Sainte Honorine (FR)**
• **Nicolas, Bertrand
78990 Elancourt (FR)**
• **Yahia, Mohamed
75005 Paris (FR)**

(56) Documents cités:
**EP-A2- 0 919 410        DE-A1-102006 026 359
US-A1- 2005 178 523**

**Description**

Le secteur technique de la présente invention est celui des ensembles ou systèmes utilisés pour conditionner un flux d'air entrant dans un habitacle de véhicule automobile. Plus particulièrement, l'invention vise un circuit de fluide réfrigérant, éventuellement combiné à un circuit de fluide caloporteur, où le circuit de fluide réfrigérant est utilisé en mode chauffage, ou pompe à chaleur. Pendant cette phase de fonctionnement, un organe constitutif du circuit de fluide réfrigérant est piloté pour limiter l'élévation de température au niveau d'un compresseur.

Un véhicule automobile est classiquement équipé d'une boucle ou circuit de climatisation à l'intérieur de laquelle circule un fluide frigorigène. Cette boucle comprend classiquement un compresseur, un condenseur, un détendeur, un échangeur interne et un évaporateur parcourus par le fluide frigorigène. L'évaporateur est installé dans une installation de ventilation, chauffage et/ou climatisation généralement montée dans l'habitacle du véhicule pour fournir à ce dernier un flux d'air chaud ou un flux d'air froid en fonction d'une demande de l'utilisateur du véhicule. Le condenseur est quant à lui classiquement installé en face avant du véhicule pour être traversé par le flux d'air extérieur au véhicule.

Cette boucle de climatisation peut être utilisée en mode refroidissement ou en mode chauffage. En mode refroidissement, le fluide réfrigérant est envoyé vers le condenseur où le fluide réfrigérant est refroidi par le flux d'air extérieur. Puis, le fluide réfrigérant circule vers le détendeur où il subit un abaissement de sa pression avant d'entrer dans l'évaporateur. Le fluide réfrigérant traversant l'évaporateur est alors chauffé par le flux d'air entrant dans l'installation de ventilation, ce qui se traduit corrélativement par un refroidissement de ce flux d'air dans le but de climatiser l'habitacle du véhicule. Le circuit étant une boucle fermée, le fluide réfrigérant retourne alors vers le compresseur.

En mode chauffage, le fluide est mis en circulation par le compresseur qui l'envoie vers l'évaporateur. Ce dernier se comporte alors comme un condenseur, où le fluide réfrigérant est refroidi par l'air circulant dans l'installation de ventilation. Cet air se chauffe donc au contact de l'évaporateur et apporte ainsi des calories à l'habitacle du véhicule. Après passage dans l'évaporateur, le fluide réfrigérant est détendu par un détendeur avant d'arriver dans le condenseur. Le flux d'air extérieur chauffe alors le fluide réfrigérant. Le flux d'air extérieur est par conséquent plus froid après son passage dans le condenseur comparé à sa température avant son passage au travers du condenseur. Le fluide réfrigérant retourne alors vers le compresseur.

Le circuit haute pression de l'échangeur interne tend à élever la pression du fluide réfrigérant qui circule dans le circuit basse pression de l'échangeur interne. En mode chauffage, un tel échangeur interne provoque une augmentation de la température du fluide réfrigérant qui pénètre dans le compresseur.

Une telle situation présente un premier inconvénient. En effet, la combinaison de l'efficacité de l'échangeur interne avec le fonctionnement en mode de chauffage du circuit de climatisation provoque une surchauffe du fluide réfrigérant à l'entrée du compresseur. Cette surchauffe impacte la température de ce fluide réfrigérant en sortie de compresseur, de sorte que le niveau de température atteint à la sortie du compresseur peut endommager les composants du circuit, en premier lieu le compresseur.

Cette situation provoque un deuxième inconvénient qui réside dans la baisse de la masse volumique du fluide réfrigérant aspiré par le compresseur. Cette baisse provoque alors une diminution excessive du débit massique de fluide réfrigérant au sein du circuit de climatisation.

Dans le but de pallier à ces inconvénients, le document US 2005/0178523, qui est considéré comme l'art antérieur le plus proche, prévoit une étape de condensation du fluide réfrigérant réalisée au niveau de l'échangeur de refroidissement.

Le but de la présente invention est donc de résoudre les inconvénients décrits ci-dessus principalement en ajustant l'efficacité de l'échangeur interne. En effet, le procédé selon l'invention permet de limiter l'échange thermique qui prend place dans l'échangeur interne entre la portion dite « haute pression » et la portion dite « basse pression » de cet échangeur interne. Ce faisant, la température du fluide réfrigérant qui traverse la portion basse pression n'est pas augmentée par la température du fluide réfrigérant qui traverse la portion haute pression puisque l'écart de température du fluide réfrigérant entre ces deux portions est réduit par le procédé objet de l'invention.

L'invention a donc pour objet un procédé de contrôle de la température d'un fluide réfrigérant à l'entrée d'un compresseur constitutif d'un circuit de climatisation comprenant en outre un échangeur de chauffage agencé pour influencer la température d'un flux d'air envoyé dans un habitacle de véhicule, un échangeur de refroidissement agencé pour influencer la température du flux d'air, un premier organe de détente installé en amont de l'échangeur de refroidissement, un échangeur interne agencé pour assurer un échange thermique entre le fluide réfrigérant à haute pression et le fluide réfrigérant à basse pression, et un échangeur extérieur, ledit procédé comprenant une étape de condensation du fluide réfrigérant réalisée au niveau de l'échangeur de refroidissement, **caractérisé en ce qu'**il comprend :

- une étape de comparaison b) entre une température du fluide réfrigérant à l'entrée du compresseur et une valeur seuil $SH_{max}$,
- et en ce que ladite étape de condensation c) du fluide réfrigérant est réalisée au niveau de l'échangeur de refroidissement si la température du fluide réfrigérant à l'entrée du compresseur est supérieure à la valeur seuil $SH_{max}$.

Selon une première caractéristique de l'invention, l'étape de condensation c) du fluide réfrigérant est opérée par une détente de ce fluide réfrigérant mise en oeuvre par le premier organe de détente.

Selon une deuxième caractéristique de l'invention, le premier organe de détente est commandé pour que la température du fluide réfrigérant dans l'échangeur de refroidissement réponde à l'équation $P_i > (P_{sat\,FR}$ à $T_{air\,in})$, où $P_i$ est la pression intermédiaire du fluide réfrigérant en aval du premier organe de détente, $P_{sat\,FR}$ est la pression de saturation du fluide réfrigérant et $T_{air\,in}$ est la température de l'air extérieur à l'habitacle.

Selon une autre caractéristique de l'invention, le premier organe de détente assure une détente telle que la température du fluide réfrigérant $T_{FR}$ dans l'échangeur de refroidissement répond à l'équation $T_{FR} < (T_{air\,in} + (SH_{max} * \alpha)$ où $T_{air\,in}$ est la température de l'air extérieur à l'habitacle, $SH_{max}$ est la valeur seuil de température maximum du fluide réfrigérant à l'entrée du compresseur, $\alpha$ est un coefficient multiplicateur compris entre 0,5 et 0,8.

Selon encore une caractéristique de l'invention, la valeur seuil $SH_{max}$ est supérieure ou égale à 35°C.

Selon encore une autre caractéristique de l'invention, préalablement à l'étape de comparaison b), on opère une étape d'estimation a) de la température du fluide réfrigérant à l'entrée du compresseur.

Avantageusement, le flux d'air envoyé dans l'habitacle est canalisé par une installation de ventilation, chauffage et/ou climatisation susceptible d'être alimentée en air provenant de l'intérieur de l'habitacle et/ou en air provenant de l'extérieur de l'habitacle, le procédé opérant une étape d'aération d) consistant en une alimentation exclusive en air provenant de l'extérieur du véhicule.

Avantageusement encore et préalablement à l'étape de comparaison a), on opère le circuit de climatisation en un mode de chauffage où l'échangeur de chauffage fonctionne comme un refroidisseur de gaz et où l'échangeur extérieur fonctionne comme un évaporateur.

Un tout premier avantage selon l'invention réside dans la possibilité d'assurer la fonction de chauffage de l'habitacle au moyen du circuit de climatisation utilisé en mode pompe à chaleur toute en réduisant la température du fluide réfrigérant à l'entrée du compresseur. Le débit massique de fluide réfrigérant est ainsi amélioré ce qui évite au compresseur de fournir un travail trop important.

Un autre avantage réside dans la mise à profit de la température de l'air extérieur à l'habitacle. En effet, cette température est utilisée pour améliorer l'efficacité de l'étape de condensation, et ainsi réduire la température du fluide réfrigérant à l'entrée du compresseur.

D'autres caractéristiques, détails et avantages de l'invention ressortiront plus clairement à la lecture de la description donnée ci-après à titre indicatif en relation avec des dessins dans lesquels :

- la figure 1 est une vue schématique d'un mode de réalisation d'un ensemble de conditionnement thermique utilisé en mode chauffage de l'habitacle pour la mise en oeuvre du procédé objet de l'invention,
- la figure 2 est une vue représentant un organigramme du procédé de contrôle selon l'invention de l'ensemble de conditionnement thermique.

Il faut noter que les figures exposent l'invention de manière détaillée pour mettre en oeuvre l'invention, lesdites figures pouvant bien entendu servir à mieux définir l'invention le cas échéant.

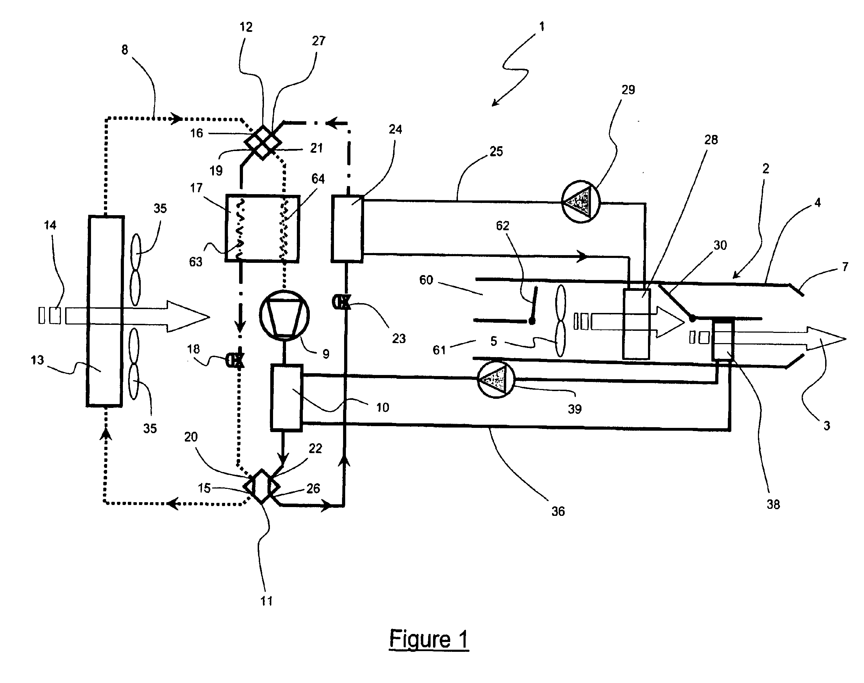

Sur la figure 1, les traits pointillés représentent les parties de la boucle ou circuit de climatisation dans lesquelles circule un fluide réfrigérant à basse pression, comparativement aux traits pleins qui représentent les parties du circuit de climatisation dans lesquelles circule ce même fluide à haute pression, c'est-à-dire à une valeur de pression plus élevée que la valeur de la basse pression du fluide.

Sur la figure 1, il est représenté un ensemble de conditionnement thermique 1 d'un habitacle de véhicule automobile qui comprend un circuit de climatisation 8 et un système de ventilation, de chauffage et/ou de climatisation 2 destiné à modifier les paramètres aérothermiques de l'air contenu ou envoyé à l'intérieur de l'habitacle d'un véhicule. Une telle modification est obtenue à partir de la délivrance d'au moins un flux d'air pulsé à l'intérieur de l'habitacle, ci-après appelé flux d'air intérieur 3. A cet effet, le système de ventilation, de chauffage et/ou de climatisation 2 comprend un boîtier 4, réalisé en matière plastique, qui loge un pulseur 5 pour faire circuler le flux d'air intérieur 3 depuis au moins une bouche d'admission d'air vers au moins une bouche de délivrance d'air 7 que comporte le boîtier.

Dans le cas d'espèce, l'installation de ventilation, chauffage et/ou climatisation comprend des bouches d'admission d'air : un bouche d'air extérieur 60 et une bouche d'air recyclé 61. La bouche d'air extérieur 60 reçoit un flux en provenance de l'extérieur de l'habitacle du véhicule tandis que la bouche d'air recyclé 61 reçoit un flux d'air en provenance de l'intérieur de l'habitacle. La proportion d'air extérieur et d'air recyclé est réglée par un ou plusieurs volets d'entrée d'air. Dans l'exemple illustré sur la figure 1, un unique volet d'entrée d'air 62 gère cette proportion.

Un tel système de ventilation, de chauffage et/ou de climatisation 2 est logé sous une planche de bord du véhicule et canalise la circulation du flux d'air intérieur 3.

L'ensemble 1 comprend le circuit de climatisation 8 à l'intérieur duquel circule un fluide réfrigérant qui apporte les calories (mode chauffage) ou les frigories (mode refroidissement) permettant à l'ensemble de conditionnement thermique de chauffer ou de refroidir le flux d'air intérieur 3.

Pour ce faire, le circuit de climatisation comporte plusieurs échangeurs thermiques entre le fluide réfrigérant et soit de l'air, soit un fluide caloporteur circulant dans un circuit distinct, un tel fluide étant par exemple de l'eau comportant du glycol.

Le fluide réfrigérant est du type d'un fluide super-critique, tel que du dioxyde de carbone, par exemple, connu sous l'appellation R744. Il peut aussi être un fluide sous-critique, tel que l'hydrofluorocarbone connu sous l'acronyme R134a ou un fluide frigorigène à faible nuisance sur l'effet de serre, c'est-à-dire qui soit en mesure d'offrir une solution durable pour les climatiseurs automobiles, connu sous la dénomination HFO1234yf.

La boucle ou circuit de climatisation 8 comprend un compresseur 9 pour comprimer le fluide réfrigérant à l'état gazeux et également élever sa température. Il comprend aussi un échangeur de chauffage 10, du type d'un refroidisseur de gaz ou condenseur, dont la fonction est d'assurer un échange thermique en vue d'influencer directement ou indirectement la température du flux d'air intérieur 3 envoyé dans l'habitacle. On notera que cet échangeur de chauffage 10 est installé directement en aval du compresseur 9 selon le sens de déplacement du fluide réfrigérant dans le circuit de climatisation 8.

Selon un exemple de réalisation du circuit de climatisation non représenté, l'échangeur de chauffage 10 réalise un échange thermique directement entre le fluide réfrigérant et le flux d'air intérieur 3, l'échangeur de chauffage 10 comprenant un faisceau de tubes délimitant des chambres dans lesquelles circule le fluide réfrigérant et à l'extérieur desquelles le flux d'air intérieur 3 circule. Dans une telle situation, l'échangeur de chauffage 10 est logé dans l'installation de ventilation, de chauffage et/ou de climatisation 2.

La figure 1 illustre une alternative où l'ensemble comprend un circuit secondaire 36 parcouru par un fluide caloporteur, dont la fonction est de réaliser le mode chauffage en chauffant le flux d'air intérieur 3. Dans une telle situation, l'échangeur de chauffage 10 n'est pas installé dans le boîtier 4. L'échange thermique entre le fluide réfrigérant et le fluide caloporteur est réalisé au moyen de l'échangeur de chauffage 10, ce dernier étant installé directement en aval du compresseur 9. Le circuit secondaire 36 comprend encore un échangeur secondaire 38 dont la fonction est de transférer les calories présentes dans le fluide caloporteur au flux d'air intérieur 3. Cet échangeur secondaire 38 est un échangeur fluide caloporteur/air installé à l'intérieur du boîtier 4, transversalement au flux d'air intérieur 3.

Le fluide caloporteur présent dans le circuit secondaire 36 est mis en mouvement par une pompe secondaire 39, avantageusement entraînée par un moteur électrique.

Le circuit de climatisation 8 comprend deux vannes à quatre voies 11 et 12 permettant à l'ensemble de conditionnement thermique d'opérer un fonctionnement en mode chauffage ou un fonctionnement en mode refroidissement.

Pour ce faire, les deux vannes 11 et 12 sont reliées l'une à l'autre de sorte qu'elles définissent quatre branches dans chacune desquelles le fluide réfrigérant est apte à circuler. Afin de faciliter la compréhension de l'architecture du circuit de climatisation 8, les branches seront, au vu de leur positionnement dans une lecture allant de gauche à droite, qualifiées de première, de deuxième, de troisième et de quatrième branches.

Par rapport au compresseur et au sens de circulation du fluide réfrigérant dans le circuit de climatisation 8, la vanne 12 est disposée en aval de la vanne 11 de sorte que cette dernière sera qualifiée par la suite de première vanne 11 et que par voie de conséquence, la vanne 12 sera qualifiée de seconde vanne 12.

La première branche, reliant les vannes 11 et 12 entre elles, comprend un échangeur thermique associé au repère 13 sur la figure 1 annexée, qui sera par la suite qualifié d'échangeur extérieur 13 étant donné qu'il est implanté, par exemple, sur une face avant du véhicule pour être traversé par un flux d'air extérieur à l'habitacle, référencé 14.

Dans un mode de réalisation, le fluide réfrigérant circule dans l'échangeur extérieur 13, tandis que le flux d'air extérieur 14 dans lequel évolue le véhicule peut être mis en mouvement par une pluralité de ventilateurs 35.

C'est ainsi qu'en mode refroidissement, le fluide réfrigérant est refroidi par le flux d'air extérieur 14 et qu'en mode chauffage, le fluide réfrigérant est chauffé en puisant de la chaleur dans le flux d'air extérieur 14. Cet échangeur extérieur 13 est lié à une première sortie 15 de la première vanne 11 et à une première entrée 16 de la seconde vanne 12 par le biais de canalisations dédiées.

La deuxième branche reliant les vannes 11 et 12 entre elles comprend, selon le sens de circulation du fluide réfrigérant, l'un des deux circuits internes 63 d'un échangeur interne 17 et un deuxième organe de détente 18.

Cet échangeur interne 17 réalise un échange thermique d'un même fluide réfrigérant en deux points distincts du circuit de climatisation, c'est-à-dire entre la portion du circuit de climatisation soumis à une haute pression / haute température et la portion du circuit de climatisation soumis à une basse pression / basse température. Une telle disposition améliore le rendement thermique du circuit de climatisation 8. Pour ce faire, l'échangeur interne 17 comprend un circuit interne haute pression 63 et un circuit interne basse pression 64, le circuit interne basse pression 64 étant disposé en amont du compresseur 9, selon un sens de circulation du fluide réfrigérant à l'intérieur du circuit de climatisation.

L'échangeur interne 17 est agencé en amont du deuxième organe de détente 18. Par conséquent, l'entrée du circuit interne haute pression 63 de l'échangeur interne 17 est reliée à une première sortie 19 de la seconde vanne 12, tandis que sa sortie est reliée à l'entrée du deuxième organe de détente 18. La sortie de ce deuxième organe de détente 18 est reliée à une première entrée 20 de la première vanne 11.

La troisième branche reliant les vannes 11 et 12 entre elles comprend, selon le sens de circulation du fluide réfrigérant, l'autre circuit d'échange thermique 64 de l'échangeur interne 17 agencé en amont du compresseur 9, ce dernier étant également disposé en amont de l'échangeur de chauffage 10 qui est destiné à chauffer l'air entrant dans l'habitacle du véhicule. C'est ainsi que, par le biais de quatre canalisations, une seconde sortie 21 de la seconde vanne 12 est reliée à l'entrée du circuit interne basse pression 64 de l'échangeur interne 17, que la sortie de ce même circuit interne 64 est reliée à l'entrée du compresseur 9, que la sortie de ce dernier est reliée à l'entrée de l'échangeur de chauffage 10, et que la sortie de cet échangeur est reliée à une seconde entrée 22 de la première vanne 11.

Enfin, la quatrième branche reliant les vannes 11 et 12 comprend, selon le sens de circulation du fluide réfrigérant, un premier organe de détente 23 disposé en amont d'un échangeur de refroidissement 24 placé à une confluence du circuit de climatisation 8 et d'un circuit primaire 25 constitutif de l'ensemble 1. Un tel échangeur de refroidissement 24 permet un transfert thermique entre le fluide réfrigérant et un fluide caloporteur circulant dans le circuit primaire 25.

Dans l'exemple représenté sur cette figure, cet échangeur de refroidissement 24 est disposé hors de l'installation de ventilation, de chauffage et/ou de climatisation 2. Alternativement, l'échangeur de refroidissement 24 est installé dans le boîtier 4, transversalement au flux d'air intérieur 3. Dans une telle situation, l'ensemble de conditionnement thermique ne comporte pas de circuit primaire 25.

On notera tout particulièrement que l'échangeur de refroidissement 24 est installé dans le circuit de climatisation après l'échangeur de chauffage 10. Autrement dit, l'échangeur de refroidissement 24 est en aval de l'échangeur de chauffage 10 selon le sens de circulation du fluide réfrigérant dans la troisième et quatrième branche. Seule la première vanne quatre voies 11 et le premier organe de détente 23 sont intercalés entre l'échangeur de chauffage 10 et l'échangeur de refroidissement 24.

C'est ainsi qu'une seconde sortie 26 de la première vanne 11 est reliée à l'entrée du premier organe de détente 23, que la sortie de cet organe 23 est reliée à l'entrée de l'échangeur de refroidissement 24, et qu'enfin la sortie de cet échangeur 24 est reliée à une seconde entrée 27 de la seconde vanne 12.

Les composants du circuit de climatisation 8 décrits ci-dessus sont raccordés les uns aux autres par l'intermédiaire de tubes, de conduites ou de tout moyen apte à canaliser le fluide réfrigérant pour le transporter d'un premier à un second point.

Le circuit primaire 25 est parcouru par un fluide caloporteur. Le circuit secondaire 36 est distinct du circuit primaire 25, en ce sens que les fluides caloporteurs qui circulent dans ces circuits ne se mélangent pas.

Le circuit primaire 25 comprend l'échangeur de refroidissement 24, un échangeur primaire 28, une pompe primaire 29 destinée à faire circuler le premier fluide caloporteur et des tuyaux pour relier ces composants.

L'échangeur primaire 28 est agencé pour assurer un échange thermique entre le fluide caloporteur circulant dans le circuit primaire 25 et le flux d'air intérieur 3 que le boîtier 4 de l'installation canalise. Il s'agit d'un échangeur thermique constitué d'une multiplicité de tubes délimitant chacun une chambre dans laquelle circule le premier fluide caloporteur et à l'extérieur de laquelle le flux d'air intérieur 3 circule.

L'échangeur primaire 28 est installé transversalement au flux d'air intérieur 3 à l'intérieur du boîtier 4 de l'installation de ventilation, de chauffage et/ou de climatisation 2. Cet échangeur primaire 28 est installé en amont de l'échangeur secondaire 38 installé constitutif du circuit secondaire 36 selon le sens du déplacement du flux d'air intérieur 3.

Le boîtier 4 comprend encore un volet de mixage 30 installé entre l'échangeur primaire 28 et l'échangeur secondaire 38 et susceptible de prendre une première position où il contraint le flux d'air intérieur 3 à passer au travers de l'échangeur primaire 38, une deuxième position où le volet de mixage 30 interdit le passage du flux d'air intérieur 3 dans l'échangeur primaire 38, ce flux d'air contournant alors cet échangeur. Le volet de mixage 30 est enfin en mesure de prendre toutes positions intermédiaires entre la première position et la deuxième position afin d'assurer un mélange ou mixage d'air froid et d'air chaud.

Le circuit de climatisation 8 vient d'être décrit et on va maintenant s'attacher à décrire son fonctionnement en mode chauffage et selon le procédé objet de l'invention.

La figure 1 montre l'ensemble de conditionnement thermique utilisé par exemple en hiver, c'est-à-dire en mode chauffage du flux d'air intérieur 3 envoyé dans l'habitacle.

Côté circuit de climatisation 8, le fluide réfrigérant est comprimé et mis en circulation par le compresseur 9, puis traverse l'échangeur de chauffage 10 où le fluide réfrigérant cède ses calories au flux d'air intérieur 3, soit directement, soit par l'intermédiaire du circuit secondaire 36 de fluide caloporteur. Le fluide réfrigérant poursuit son parcours en circulant au travers de la première vanne quatre voies 11, en entrant par la seconde entrée 22 pour sortir par la seconde sortie 26.

Le fluide réfrigérant passe au travers du premier organe de détente 23 et traverse ensuite l'échangeur de refroidissement 24 où le fluide réfrigérant cède ses frigories au flux d'air intérieur 3, soit directement, soit par l'intermédiaire du circuit primaire 25 de fluide caloporteur.

Le fluide réfrigérant passe alors dans la deuxième vanne quatre voies 12 en entrant par sa deuxième entrée 27 et en sortant par sa première sortie 19. Le fluide réfrigérant passe ensuite dans l'échangeur interne 17 pour atteindre le deuxième organe de détente 18. Cet organe de détente 18 autorise une circulation du fluide réfrigérant vers l'échangeur extérieur 13, au travers duquel il subit un abaissement de sa pression.

Le fluide réfrigérant, ainsi détendu, échange avec le flux d'air extérieur 14, ce qui se traduit par une élévation de température du fluide réfrigérant. Dans cette situation, l'échangeur extérieur se comporte comme un évaporateur.

Le fluide poursuit son chemin et pénètre par la première entrée 16 dans la deuxième vanne quatre voies 12. Il en ressort par la seconde sortie référencée 21, puis entre dans le circuit basse pression de l'échangeur interne 17.

Le circuit de climatisation 8 étant une boucle fermée, le fluide réfrigérant termine son cycle en arrivant à l'entrée du compresseur 9.

Dans une telle situation de fonctionnement, il est possible de voir la température du fluide réfrigérant à l'entrée du compresseur 9 dépasser un niveau au delà duquel le débit massique du compresseur est affecté.

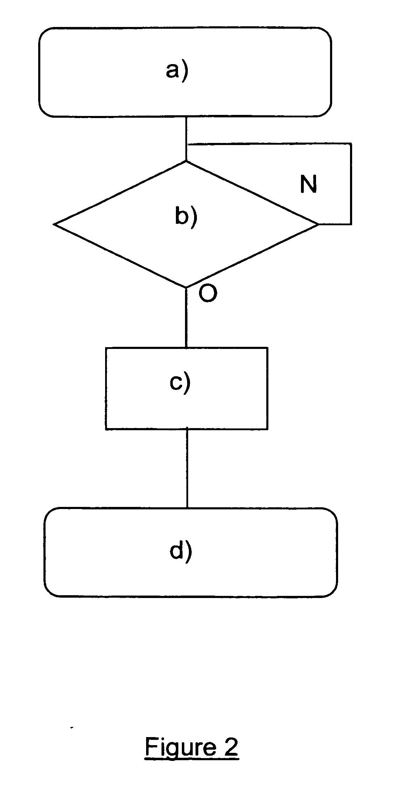

La figure 2 est un organigramme illustrant le processus décisionnel opéré par le procédé selon l'invention.

Le procédé objet de l'invention met en oeuvre une étape de comparaison b) entre une température du fluide réfrigérant à l'entrée du compresseur et une valeur seuil $SH_{max}$. Cette étape de comparaison vise à vérifier la présence d'un risque d'élévation de la température du fluide réfrigérant à l'entrée du compresseur 9. Si ce risque n'est pas avéré ou une élévation de température n'est pas détectée (sortie N), l'étape b) boucle sur elle-même et la détermination du risque d'augmentation de la température du fluide réfrigérant est opérée de manière cyclique.

En revanche, si la température du fluide réfrigérant dépasse la valeur seuil $SH_{max}$ (sortie O), le procédé selon l'invention met en oeuvre une étape de condensation c) du fluide réfrigérant, cette condensation étant réalisée au niveau de l'échangeur de refroidissement 24.

Selon une option du procédé selon l'invention, il est prévu une étape a) réalisée immédiatement avant l'étape de comparaison b). Cette étape a) a pour objet de déterminer la température du fluide réfrigérant à l'entrée du compresseur 9, au moment où le circuit de climatisation 8 est activé. Le procédé selon l'invention prévoit donc une étape d'estimation a) de la température du fluide réfrigérant à l'entrée du compresseur. Cette étape d'estimation a) est réalisée au moyen de la formule suivante :

$$Tc_{est} = T°\text{sonde évaporateur} - T°\text{air extérieur} + 5°C,$$

où T°sonde évaporateur est une température obtenue par une sonde incrustée dans l'échangeur primaire 28, une telle sonde étant destinée également à éviter le givrage de cet échangeur quand le mode de refroidissement est activé,

où T° air extérieur est une information de température disponible sur un réseau CAN du véhicule, cette information étant l'image de la température à l'extérieur de l'habitacle du véhicule.

Selon l'invention, la valeur seuil $SH_{max}$ est supérieure ou égale à 35°C. Une telle valeur déclenche l'activation de l'étape de condensation c) et garantit ainsi un débit massique satisfaisant pour le compresseur.

Cette étape de condensation c) du fluide réfrigérant est opérée par une détente de ce fluide réfrigérant mise en oeuvre par le premier organe de détente 23. Quand le mode de chauffage est activé mais que le risque d'élévation de la température à l'entrée du compresseur n'est pas vérifié, le premier organe de détente n'opère pas de détente. Il est par exemple ouvert entièrement. Alternativement, il peut comprendre une conduite de contournement qui laisse passer librement le fluide réfrigérant.

En revanche, dés lors que l'étape b) est vérifiée, le premier organe de détente 23 opère une restriction de sa section de passage. Ceci se traduit par un abaissement de la pression du fluide réfrigérant. Il s'ensuit que la pression de ce fluide réfrigérant entre une sortie du premier organe de détente 23 et une entrée du deuxième organe de détente 18 est à un niveau intermédiaire symbolisé sur la figure 1 par des traits interrompus longs et courts. La pression intermédiaire $P_i$ est en dessous de la haute pression en sortie de compresseur 9 mais au dessus de la basse pression en entrée de ce même compresseur.

Cette pression intermédiaire $P_i$ est choisit de sorte à vérifier l'équation suivante : $P_i > (P_{sat\,FR}$ à $T_{air\,in})$, où $P_i$ est la pression intermédiaire du fluide réfrigérant en aval du premier organe de détente selon le sens de déplacement du fluide réfrigérant dans le circuit de climatisation 8. $P_{sat\,FR}$ est la pression de saturation du fluide réfrigérant, cette dernière étant dépendante du type de fluide réfrigérant utilisé, et $T_{air\,in}$ est la température extérieure à l'habitacle.

La température extérieure à l'habitacle $T_{air\,in}$ est mesurée par un capteur existant sur le véhicule.

Selon un exemple de mise en oeuvre du procédé selon l'invention, le premier organe de détente 23 assure une détente telle que la température du fluide réfrigérant dans l'échangeur de refroidissement $T_{FR}$ répond à l'équation $T_{FR} < (T_{air\,in} + (SH_{max} * \alpha)$ où $T_{air\,in}$ est la température extérieure à l'habitacle, $SH_{max}$ est la valeur seuil de température maximum du fluide réfrigérant à l'entrée du compresseur, $\alpha$ est un coefficient compris entre 0,5 et 0,8. Une organisation garantit que l'échangeur de refroidissement 24 fonctionne en mode condensation.

Le coefficient $\alpha$ détermine le niveau de pression intermédiaire Pi présent dans le circuit de climatisation entre le premier organe de détente 23 et le deuxième organe de détente 18.

Le procédé objet de l'invention est complété par une étape dite d'aération d). Cette étape consiste à commander le volet d'entrée d'air 62 de l'installation de ventilation, chauffage et/ou climatisation pour interdire toute recirculation d'air, c'est-à-dire toute entrée d'air en provenance de l'habitacle à l'intérieur du boîtier 4. C'est ainsi que le volet d'entrée d'air 62 est placé dans une position où il autorise uniquement l'entrée d'air en provenance de l'extérieur de l'habitacle.

En conditions hivernales quand le mode chauffage est activé, la température de l'air qui influence, directement ou indirectement, l'échangeur de refroidissement 24 est par exemple égale à 0°C. L'é tape de condensation c) place l'échangeur de refroidissement 24 à une température par exemple égale à 15°C, il se produit donc un échange thermique favorable pour abaisser la température du fluide réfrigérant à l'entrée du compresseur 9.

Lorsque le premier organe de détente 23 crée une pression intermédiaire $P_i$ au niveau de l'échangeur de refroidissement 24, le fluide réfrigérant qui circule au travers de cet échangeur est alors refroidi. Il l'est d'autant plus que le volet d'entrée d'air 62 est placé dans une position où seul l'air extérieur est susceptible d'échanger avec l'échangeur de refroidissement 24.

Ce fluide réfrigérant ainsi refroidi traverse le circuit haute pression 63, ce qui tend à abaisser la température du fluide réfrigérant qui passe au travers du circuit basse pression 64 de l'échangeur interne. De cette manière, on abaisse la température du fluide réfrigérant qui entre dans le compresseur 9.

En réglant la pression intermédiaire $P_i$ au moyen du premier organe de détente 23, le procédé gère l'échange thermique entre le circuit haute pression 63 et le circuit basse pression 64 de l'échangeur interne 17 ce qui permet de maintenir la température du fluide réfrigérant à l'entrée du compresseur en dessous du seuil de surchauffe $SH_{max}$.

**Revendications**

1. Procédé de contrôle de la température d'un fluide réfrigérant à l'entrée d'un compresseur (9) constitutif d'un circuit de climatisation (8) comprenant en outre un échangeur de chauffage (10) agencé pour influencer la température d'un flux d'air (3) envoyé dans un habitacle de véhicule, un échangeur de refroidissement (24) agencé pour influencer la température du flux d'air (3), un premier organe de détente (23) installé en amont de l'échangeur de refroidissement (24), un échangeur interne (17) agencé pour assurer un échange thermique entre le fluide réfrigérant à haute pression et le fluide réfrigérant à basse pression, et un échangeur extérieur (13), ledit procédé comprenant une étape de condensation du fluide réfrigérant réalisée au niveau de l'échangeur de refroidissement (24), **caractérisé en ce qu'**il comprend :

   - une étape de comparaison b) entre une température du fluide réfrigérant à l'entrée du compresseur (9) et une valeur seuil $SH_{max}$,
   et **en ce que** ladite étape de condensation c) du fluide réfrigérant est réalisée au niveau de l'échangeur de refroidissement (24) si la température du fluide réfrigérant à l'entrée du compresseur (9) est supérieure à la valeur seuil $SH_{max}$.

2. Procédé selon la revendication 1, dans lequel l'étape de condensation c) du fluide réfrigérant est opérée par une détente de ce fluide réfrigérant mise en oeuvre par le premier organe de détente (23).

3. Procédé selon la revendication 2, dans lequel le premier organe de détente (23) est commandé pour que la température du fluide réfrigérant dans l'échangeur de refroidissement (24) réponde à l'équation $P_i > (P_{sat\ FR}$ à $T_{air\ in})$, où $P_i$ est la pression intermédiaire du fluide réfrigérant en aval du premier organe de détente (23), $P_{sat\ FR}$ est la pression de saturation du fluide réfrigérant et $T_{air\ in}$ est la température de l'air extérieur à l'habitacle.

4. Procédé selon l'une quelconque des revendications 1 à 3, dans lequel le premier organe de détente (23) assure une détente telle que la température du fluide réfrigérant $T_{FR}$ dans l'échangeur de refroidissement (24) répond à l'équation $T_{FR} < [T_{air\ in} + (SH_{max} * \alpha)]$ où $T_{air\ in}$ est la température de l'air extérieur à l'habitacle, $SH_{max}$ est la valeur seuil de température maximum du fluide réfrigérant à l'entrée du compresseur (9), a est un coefficient compris entre 0,5 et 0,8.

5. Procédé selon la revendication 4, dans lequel la valeur seuil $SH_{max}$ est supérieure ou égale à 35°C.

6. Procédé selon l'une quelconque des revendications précédentes, dans  lequel, préalablement à l'étape de comparaison b), on opère une étape d'estimation a) de la température du fluide réfrigérant à l'entrée du compresseur (9).

7. Procédé selon l'une quelconque des revendications précédentes, où le flux d'air (3) envoyé dans l'habitacle est canalisé par une installation de ventilation, chauffage et/ou climatisation (2) susceptible d'être alimentée en air provenant de l'intérieur de l'habitacle et/ou en air provenant de l'extérieur de l'habitacle, dans lequel est opéré une étape d'aération d) consistant en une alimentation exclusive en air provenant de l'extérieur du véhicule.

**8.** Procédé selon l'une quelconque des revendications précédentes, dans lequel, préalablement à l'étape de comparaison a), on opère le circuit de climatisation (8) en un mode de chauffage où l'échangeur de chauffage (24) fonctionne comme un refroidisseur de gaz et où l'échangeur extérieur fonctionne comme un évaporateur.

**Patentansprüche**

**1.** Verfahren zur Regelung der Temperatur eines Kühlfluids am Eingang eines Kompressors (9), der Teil eines Klimatisierungskreislaufs (8) ist, welcher außerdem einen Heiztauscher (10), der eingerichtet ist, um die Temperatur eines Luftstroms (3) zu beeinflussen, der in einen Fahrzeuginnenraum geschickt wird, einen Kühltauscher (24), der eingerichtet ist, um die Temperatur des Luftstroms (3) zu beeinflussen, ein erstes Entspannungselement (23), das vor dem Kühltauscher (24) angeordnet ist, einen inneren Tauscher (17), der eingerichtet ist, um einen Wärmeaustausch zwischen dem Hochdruck-Kühlfluid und dem Niederdruck-Kühlfluid zu gewährleisten, und einen äußeren Tauscher (13) enthält, wobei das Verfahren einen Schritt der Kondensation des Kühlfluids enthält, der im Bereich des Kühltauschers (24) durchgeführt wird, **dadurch gekennzeichnet, dass** es enthält:

- einen Vergleichsschritt b) zwischen einer Temperatur des Kühlfluids am Eingang des Kompressors (9) und einem Schwellwert $SH_{max}$,
und dass der Kondensationsschritt c) des Kühlfluids im Bereich des Kühltauschers (24) durchgeführt wird, wenn die Temperatur des Kühlfluids am Eingang des Kompressors (9) höher als der Schwellwert $SH_{max}$ ist.

**2.** Verfahren nach Anspruch 1, wobei der Kondensationsschritt c) des Kühlfluids durch eine Entspannung dieses Kühlfluids erfolgt, die vom ersten Entspannungselement (23) angewendet wird.

**3.** Verfahren nach Anspruch 2, wobei das erste Entspannungselement (23) so gesteuert wird, dass die Temperatur des Kühlfluids im Kühltauscher (24) die Gleichung $P_i > (P_{sat\,FR}$ bei $T_{air\,in})$ erfüllt, in der $P_i$ der Zwischendruck des Kühlfluids hinter dem ersten Entspannungselement (23), $P_{sat\,FR}$ der Sättigungsdruck des Kühlfluids und $T_{air\,in}$ die Temperatur der Luft außerhalb des Innenraums ist.

**4.** Verfahren nach einem der Ansprüche 1 bis 3, wobei das erste Entspannungselement (23) eine solche Entspannung gewährleistet, dass die Temperatur des Kühlfluids $T_{FR}$ im Kühltauscher (24) die Gleichung $T_{FR} < [T_{air\,in} + (SH_{max} * \alpha)]$ erfüllt, wobei $T_{air}$ in die Temperatur der Luft außerhalb des Innenraums, $SH_{max}$ der Schwellwert der maximalen Temperatur des Kühlfluids am Eingang des Kompressors (9), $\alpha$ ein Koeffizient zwischen 0,5 und 0,8 ist.

**5.** Verfahren nach Anspruch 4, wobei der Schwellwert $SH_{max}$ höher als oder gleich 35°C ist.

**6.** Verfahren nach einem der vorhergehenden Ansprüche, wobei vor dem Vergleichsschritt b) ein Schätzschritt a) der Temperatur des Kühlfluids am Eingang des Kompressors (9) durchgeführt wird.

**7.** Verfahren nach einem der vorhergehenden Ansprüche, wobei der in den Innenraum geschickte Luftstrom (3) von einer Lüftungs-, Heiz- und/oder Klimatisierungsanlage (2) kanalisiert wird, die mit von innerhalb des Innenraums kommender Luft und/oder mit von außerhalb des Innenraums kommender Luft gespeist werden kann, wobei ein Belüftungsschritt d) durchgeführt wird, der aus einer ausschließlichen Speisung mit von außerhalb des Fahrzeugs kommender Luft besteht.

**8.** Verfahren nach einem der vorhergehenden Ansprüche, wobei vor dem Vergleichsschritt b) der Klimatisierungskreislauf (8) in einem Heizmodus betrieben wird, in dem der Heiztauscher (24) als Gaskühler funktioniert und in dem der äußere Tauscher als ein Verdampfer funktioniert.

**Claims**

**1.** Method for controlling the temperature of a coolant at the inlet of a compressor (9) that forms part of an air conditioning circuit (8) further comprising a heating heat exchanger (10) designed to influence the temperature of a flow (3) of air sent into a vehicle interior, a cooling heat exchanger (24) designed to influence the temperature of the flow (3) of air, a first expansion member (23) installed upstream of the cooling heat exchanger (24), an internal exchanger (17) designed to achieve an exchange of heat between the coolant at high pressure and the coolant at low pressure, and an external heat exchanger (13), the said method involving a step of condensing the coolant, which step is performed at the cooling heat exchanger (24), **characterized in that** it comprises:

- a comparison step b) in which a temperature of the coolant at the inlet of the compressor (9) is compared against a threshold value $SH_{max}$,

and **in that** the said condensing step c) of condensing the coolant is performed at the cooling heat exchanger (24) if the temperature of the coolant at the inlet to the compressor (9) is above the threshold value $SH_{max}$.

2. Method according to Claim 1, in which the condensing step c) of condensing the coolant is performed by an expansion of this coolant which is performed by the first expansion member (23).

3. Method according to Claim 2, in which the first expansion member (23) is operated in such a way that the temperature of the coolant in the cooling heat exchanger (24) satisfies the equation $P_i > (P_{sat\ FR}$ at $T_{air\ in})$ where $P_i$ is the intermediate pressure of the coolant downstream of the first expansion member (23), $P_{sat\ FR}$ is the saturation pressure of the coolant and $T_{air\ in}$ is the temperature of the air outside the vehicle interior.

4. Method according to any one of Claims 1 to 3, in which the first expansion member (23) performs an expansion such that the temperature of the coolant $T_{FR}$ in the cooling heat exchanger (24) satisfies the equation $T_{FR} < [T_{air\ in} + (SH_{max} * \alpha)]$ where $T_{air}$ in is the temperature of the air outside the vehicle interior, $SH_{max}$ is the threshold value for the maximum temperature of the coolant at the inlet to the compressor (9) and $\alpha$ is a coefficient comprised between 0.5 and 0.8.

5. Method according to Claim 4, in which the threshold value $SH_{max}$ is greater than or equal to 35°C.

6. Method according to any one of the preceding claims, in which, prior to the comparison step b), an estimating step a) is performed to estimate the temperature of the coolant at the inlet to the compressor (9).

7. Method according to any one of the preceding claims, in which the flow (3) of air sent into the vehicle interior is ducted through a heating, ventilation and/or air conditioning installation (2) that can be supplied with air from inside the vehicle interior and/or with air from outside the vehicle interior, in which method a ventilation step d) is performed which consists in supplying air exclusively from outside the vehicle.

8. Method according to any one of the preceding claims, in which, prior to the comparison step b), the air conditioning circuit (8) is operated in a heating mode in which the heating heat exchanger (24) operates as a gas cooler and in which the external heat exchanger operates as an evaporator.

Figure 1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050178523 A